# EUROPÄISCHE PATENTSCHRIFT

(11) **EP 1 131 544 B1**
(45) Veröffentlichungstag und Bekanntmachung des Hinweises auf die Patenterteilung: **18.09.2002**
(21) Anmeldenummer: 99972287.9
(22) Anmeldetag: 03.11.1999
(51) Int. Cl.: F01N 11/00, F01N 3/08

(54) **ÜBERWACHUNGSVERFAHREN FÜR NOx SPEICHERKATALYSATOREN UND ABGASREINIGUNGSVORRICHTUNG ZUR DURCHFÜHRUNG DIESES VERFAHRENS**
METHOD FOR MONITORING NOx STORAGE CATALYTIC CONVERTERS AND EXHAUST-GAS PURIFICATION DEVICE FOR CARRYING OUT SAID METHOD
PROCEDE DE SURVEILLANCE POUR DES CATALYSEURS A ACCUMULATION DE NOx ET DISPOSITIF D'EPURATION DE GAZ D'ECHAPPEMENT PERMETTANT LA MISE EN OEUVRE DUDIT PROCEDE

(30) Priorität: 12.11.1998 DE 19852240
(43) Veröffentlichungstag der Anmeldung: 12.09.2001
(73) Patentinhaber: Volkswagen Aktiengesellschaft, 38436 Wolfsburg (DE)
(72) Erfinder: LANG, Axel, D-38302 Wolfenbüttel (DE); DRÜCKHAMMER, Jens, D-38108 Braunschweig (DE); SCHULZE, Frank, D-38533 Vordorf (DE)
(74) Vertreter: Pohlmann, Bernd Michael
(86) Internationale Anmeldenummer: EP9908379
(87) Internationale Veröffentlichungsnummer: WO00029729

(56) Entgegenhaltungen:
- DE-A- 4 040 329
- DE-C- 19 753 718
- GB-A- 2 315 569
- US-A- 5 426 934
- US-A- 5 771 686
- PATENT ABSTRACTS OF JAPAN vol. 1995, no. 09, 31. Oktober 1995 (1995-10-31) & JP 07 166851 A (TOYOTA MOTOR CORP), 27. Juni 1995 (1995-06-27)

## Beschreibung

Die vorliegende Erfindung betrifft ein Verfahren zur Überwachung eines einer mager betriebenen Brennkraftmaschine nachgeschalteten NOₓ-Speicherkatalysators und eine Abgasreinigungsvorrichtung zur Durchführung dieses Verfahrens.

NOₓ-Speicherkatalysatoren bestehen aus einer üblichen 3-Wege-Beschichtung, die um eine NOₓ-Speicherkomponente erweitert ist. Sie lagern die im Abgas enthaltenen Stickoxide bei magerer Betriebsweise durch Nitratbildung ein und setzen sie bei intermittierenden Katalysatorregenerationen unter reduzierenden Bedingungen im fetten Abgas in unschädlichen Stickstoff um, wobei sie gezielt entleert werden und im wesentlichen ihre volle Absorptionsfähigkeit für Stickoxide zurückerhalten, die mit zunehmender Stickoxidbeladung in der Magerphase kontinuierlich absinkt.

Bei einem thermisch geschädigten oder vergifteten Speicherkatalysator hingegen ist die NOₓ-Absorptionsfähigkeit oder der Speicherwirkungsgrad entsprechend geringer, was sich im Magerbetrieb in einer schneller ansteigenden NOₓ-Konzentration bzw. NOₓ-Masse nach dem Speicherkatalysator niederschlägt, so daß eine ordnungsgemäße Abgasreinigung nicht mehr gewährleistet ist.

Für den praktischen Einsatz von NOₓ-Speicherkatalysatoren sind daher Überwachungsoder Diagnoseverfahren zur Überprüfung der ordnungsgemäßen Funktionsweise der Katalysatoren von großem Interesse. Bisher üblichen Katalysatordiagnoseverfahren, bei denen die Sauerstoffspeicherkapazität der Katalysatoren mittels Lambda-Sonden bestimmt und mit dem Katalysatorumsatz und dem Emissionsverhalten korreliert wird, sind für Magerbrennverfahren nicht geeignet. Bei einer Betriebsweise mit λ > 1, der für zukünftige Magerkonzepte den emissionsbestimmenden Betriebsbereich darstellt, wird von Sauerstoffsonden wegen des permanenten Restsauerstoffs im Abgas kein verwertbares Signal mit ausreichender Auflösung ausgegeben.

Die GB-A-2 315 569 offenbart ein Verfahren und eine Vorrichtung zum Betreiben einer Brennkraftmaschine, insbesondere ein Dieselmotor, mit niedrigen Stickoxidernissionen. Der Brennkraftmaschine ist ein NOₓ-Katalysator nachgeschaltet, dessen Funktionsfähigkeit durch Messung der NOₓ-Konzentrationen des in ihn ein- und aus ihm ausströmenden Abgases mittels eines vor- bzw. nachgeschalteten NOₓ-Sensors überwacht wird. Bei mangelnder Funktionsfähigkeit des NOₓ-Katalysators innerhalb eines für eine effektive katalytische Stickoxidreduktion geeigneten Temperaturbereiches, dessen Einhaltung mittels eines Katalysator-Temperatursensors überwacht wird, wird automatisch ein Warnsignal angezeigt. Eine Regeneration des NOₓ-Katalysators zur Wiederherstellung seiner Funktionsfähigkeit wird hierbei nicht in Betracht gezogen.

Die JP-A-07166851 offenbart eine Emissions-Steuerungsvorrichtung für eine Brennkraftmaschine mit einem nachgeschalteten NOₓ-Speicher, dessen Funktionsfähigkeit ebenfalls durch Messung der NOₓ-Konzentrationen des in ihn ein- und aus ihm ausströmenden Abgases mittels eines vor- bzw. nachgeschalteten NOₓ-Sensors überwacht wird. Gegsbenenfall wird zur Überwachung auch nur ein nachgeschalteter NOₓ-Sensor eingesetzt. Bei mangelnder Funktionsfähigkeit wird der NOₓ-Speicher automatisch regeneriert. Eine Erkennung und Signalisierung eventueller Katalysatordefekte ist in diesem Dokument nicht vorgesehen.

Die US-A-5 881 686 offenbart ein Verfahren und eine Vorrichtung zum Detrelben eines Dieselmotors mit einem nachgeschalteten NOₓ-Speicherkatalysator. Die NOₓ-Abgaskonzentration hinter dem NOₓ-Speicherkatalysator wird hierbei mittels eines nachgeschalteten NOₓ-Sensors gemessen und mit einem bestimmten NOₓ-Schwellenwert verglichen, bei dessen Überschreitung automatisch eine NOₓ-Regeneration des NOₓ-Speicherkatalysators durchgeführt wird. Eine Erkennung und Signalisierung eventueller Katalysatordefekte ist auch in diesem Dokument nicht vorgesehen.

Die US-A-5 426 934 offenbart eine Abgasreinigungsvorrichtung für eine mager betriebene Brennkraftmaschine mit einem nachgeschalteten NOₓ-Katalysator, dem zur Bestimmung der NOₓ-Konzentrationen des in ihn ein- und aus ihm ausströmenden Abgases je ein NOₓ-Sensor vor- bzw. nachgeschaltet ist. Dem NOₓ-Katalysator, ist darübcr hinaus noch eine Lambda-Sensor zur Bestimmung des Sauerstoffgehaltes vorgeschaltet. Die Sensoren sind mit einer zugeordneten Auswerteeinrichtung zur Erfassung und Auswertung der Sensorsignale und zur Bestimmung der Katalysatoreffektivität aus den gemessenen NOₓ-Konzentrationen verbunden.

Die Aufgabe der vorliegenden Erfindung besteht in der Schaffung eines Überwachungsoder Diagnoseverfahrens für einen einer mager betriebenen Brennkraftmaschine nachgeschalteten NOₓ-Speicherkatalysator, mit dem sich Katalysatordefekte oder Katalysatorvergiftungen und eine dadurch hervorgerufene Abnahme der Katalysatoraktivität oder des Speicherwirkungsgrades zuverlässig und schnell erkennen lassen, so daß stets eine ordnungsgemäße Funktionsweise des Katalysators gewährleistet ist. Die Aufgabe besteht auch in der Schaffung eines einen NOₓ-Speicherkatalysator umfassenden Abgasreinigungsvorrichtung zur Durchführung dieses Verfahrens.

Der erste Teil der Aufgabe wird erfindungsgemäß durch ein Verfahren gemäß Anspruch 1 gelöst, wobei besondere Ausführungsformen den zugehörigen Unteransprüchen zu entnehmen sind.

Bei dem erfindungsgemäßen Verfahren werden die NOₓ-Abgaskonzentrationen vor und nach dem NOₓ-Speicherkatalysator bestimmt und in NOₓ-Massenströme umgerechnet. Aus diesen Werten wird nun der eigentlich interessierende NOₓ-Speicherwirkungsgrad ermittelt und mit einem einen nicht mehr ausreichend funktionsfähigen oder defekten Speicherkatalysator anzeigenden Schwellenwert verglichen.

Da eine Verringerung der Katalysatoraktivität oder des Speicherwirkungsgrades jedoch nicht nur auf einer eventuellen Katalysatorschädigung oder einem Katalysatordefekt beruhen kann sondern beispielsweise auch auf eine zu hohe Stickoxidbeladung und/oder eine reversible Schwefelvergiftung zurückzuführen sein kann, wird bei Überschreitung dieses Schwellenwertes zunächst eine NOₓ-Regeneration und/oder De-Sulfatierung durchgeführt und der Speicherwirkungsgrad erneut bestimmt. Erst bei einer neuerlichen Überschreitung des vorbestimmten Schwellenwertes wird dann von einer irreversiblen Katalysatorschädigung ausgegangen, die als solche angezeigt wird.

Vor und während einer Katalysatorüberprüfung wird die Einhaltung vorbestimmter Betriebsbedingungen überprüft, denen beispielsweise die Katalysatorbeladung, die Katalysatortemperatur und der Lambda-Wert genügen müssen und die u.a. gewährleisten, daß die Katalysatorüberprüfung nur unter mageren Abgasbedingungen und in einem Temperaturbereich abläuft, in dem der Katalysator bezüglich einer NOₓ-Einlagerung aktiv ist. Die Katalysatortemperatur muß daher vorzugsweise in einem vorbestimmten Temperaturbereich, insbesondere zwischen 200 und 600 °C liegen, der von dem jeweils verwendeten Katalysatorsystem und insbesondere von der Katalysatorbeschichtung abhängig ist. Zudem muß die NOₓ-Beladung des Katalysators unter einem vorbestimmten Schwellenwert liegen, der vorzugsweise einem vollständig regenerierten Katalysator entspricht. Außerdem muß der Lambda-Wert vor und/oder nach dem Speicherkatalysator > 1 sein, wobei vorzugsweise die Einschaltung des Magerbetriebes durch ein Statusbit der Motorsteuerung angezeigt werden muß.

Bei Nichteinhaltung dieser Bedingungen wird keine Katalysatorüberwachung durchgeführt oder eine bereits begonnene Überwachung wird abgebrochen oder zumindest unterbrochen.

Bei Beginn des Überwachungsverfahrens wird vorzugsweise eine Zeitfunktion oder ein Zeitzähler gestartet, der mit einer vorbestimmten Überwachungs- oder Diagnosezeit verglichen wird. Nach Erreichen dieser Zeit wird der ermittelte Speicherwirkungsgrad gespeichert, wobei die gespeicherten Werte vorzugsweise gezählt und nach Erreichen einer vorbestimmten Anzahl an gespeicherten Werten gemittelt werden. Der so gemittelte Wert wird dann schließlich mit dem oben erwähnten Schwellenwert verglichen.

Um Abhängigkeiten des Speicherwirkungsgrades von der Katalysatorbeladung und der Raumgeschwindigkeit auszugleichen, wird hierbei die gemessene Abgaskonzentration nach dem NOₓ-Speicherkatalysator bzw. der daraus bestimmte NOₓ-Massenstrom in Abhängigkeit von diesen beiden Größen bewertet oder gewichtet.

Der Speicherwirkungsgrad wird vorzugsweise noch mit der in der Überwachungszeit bestimmten gemittelten Katalysatortemperatur gewichtet, die durch vor und nach dem Speicherkatalysator angeordnete Temperatursensoren bestimmt oder durch Modellierung in einer zugeordneten Steuerungseinrichtung berechnet wird.

Eine andere bevorzugte Möglichkeit besteht darin, den NOₓ-Speicherwirkungsgrad für mehrere unterschiedliche Temperaturen als Funktion der mittleren Katalysatortemperatur zu bestimmen und in eine Kennlinie oder einem Kennfeld zu speichern, aus dessen charakteristischen Veränderungen sich gealterte, vergiftete oder defekte Katalysatoren einfach erkennen und sicher diagnostizieren lassen. Die charakteristischen Veränderungen des Kennfeldes können eine Verringerung des Speicherwirkungsgrades bei bestimmten Temperaturen, eine entsprechende Veränderung des Mittelwertes der Verringerung des Speicherwirkungsgrades über einen bestimmten Temperaturbereich oder eine Veränderung der Katalysatortemperatur, bei der ein bestimmter Wirkungsgrad erreicht ist, umfassen.

Der Lambda-Wert und die NOₓ-Abgaskonzentration des in den NOₓ-Speicherkatalysator einströmenden und/oder aus ihm ausströmenden Abgases werden vorzugsweise durch einen vorgeschalteten bzw. nachgeschalteten Multifunktionssensor bestimmt, der eine NOₓ-empfindliche und eine sauerstoffempfindliche Meßeinrichtung umfaßt.

Eine erfindungsgemäße Abgasvorrichtung zur Durchführung dieses Verfahrens umfaßt einen NOₓ-Speicherkatalysator, dem zur Bestimmung des Sauerstoffverhältnisses in dem in den Katalysator einströmenden bzw. aus ihm ausströmenden Abgas jeweils ein Lambda-Sensor vor- bzw. nachgeschaltet ist. Dem NOₓ-Speicherkatalysator ist zudem zur Bestimmung der NOₓ-Abgaskonzentration im ein- bzw. ausströmenden Abgas ein NOₓ-Sensor vor- bzw. nachgeschaltet Ergänzend oder aber auch alternativ hierzu kann die NOₓ-Abgaskonzentration im einströmenden Abgas jedoch auch durch eine zugeordnete Modellierungseinrichtung bestimmt werden, so daß der vorgeschaltete NOₓ-Sensor auch entfallen kann. Die erfindungsgemäße Abgasreinigungsvorrichtung umfaßt zudem noch eine Auswerteeinrichtung zur Auswertung der Sensorsignale und eine Steuerungseinrichtung zur Steuerung des oben beschriebenen erfindungsgemäßen Überwachungs- oder Diagnoseverfahrens

Bevorzugte Ausführungsformen dieser Abgasreinigungsvorrichtung umfassen beispielsweise einen vorgeschalteten und/oder einen nachgeschalteten Temperatursensor oder zumindest einen Multifunktionssensor mit einer integrierten NOₓempfindlichen und sauerstoffempfindlichen Meßeinrichtung.

Die verwendeten Sensoren sind vorteilhafterweise bezüglich einer Nullpunktsdrift und eines Kennlinien-Offsets adaptiert.

Weitere Merkmale und Vorteile des erfindungsgemäßen Verfahrens und der erfindungsgemäßen Abgasreinigungsvorrichtung zur Durchführung dieses Verfahrens ergeben sich nicht nur aus den zugehörigen Ansprüchen - für sich und/oder in Kombination - sondern auch aus der nachfolgenden Beschreibung bevorzugter Ausführungsbeispiele in Verbindung mit den zugehörigen Zeichnungen. In den Zeichnungen zeigen:
- Fig. 1a: die erste Hälfte eines Flußdiagramms des erfindungsgemäßen Verfahrens;
- Fig. 1b: die zugehörige zweite Hälfte des Flußdiagramms gemäß Fig. 1a;
- Fig. 2: eine ausführliche Darstellung des Blockes ETANOX in Fig. 1a, in dem der Speicherwirkungsgrad bestimmt wird;
- Fig. 3: eine schematische Darstellung der Auswertung/Wichtung des NOₓ-Speicherwirkungsgrades in Abhängigkeit von der mittleren Katalysatortemperatur;
- Fig. 4: ein prinzipielles Beispiel für die Abhängigkeit des NOₓ-Speicherwirkungsgrades von der Katalysatortemperatur bei einem neuen, einem gealterten und einem durch Schwefel vergifteten NOₓ-Speicherkatalysator; und
- Fig. 5: eine schematische Darstellung einer erfindungsgemäßen Abgasreinigungsvorrichtung.

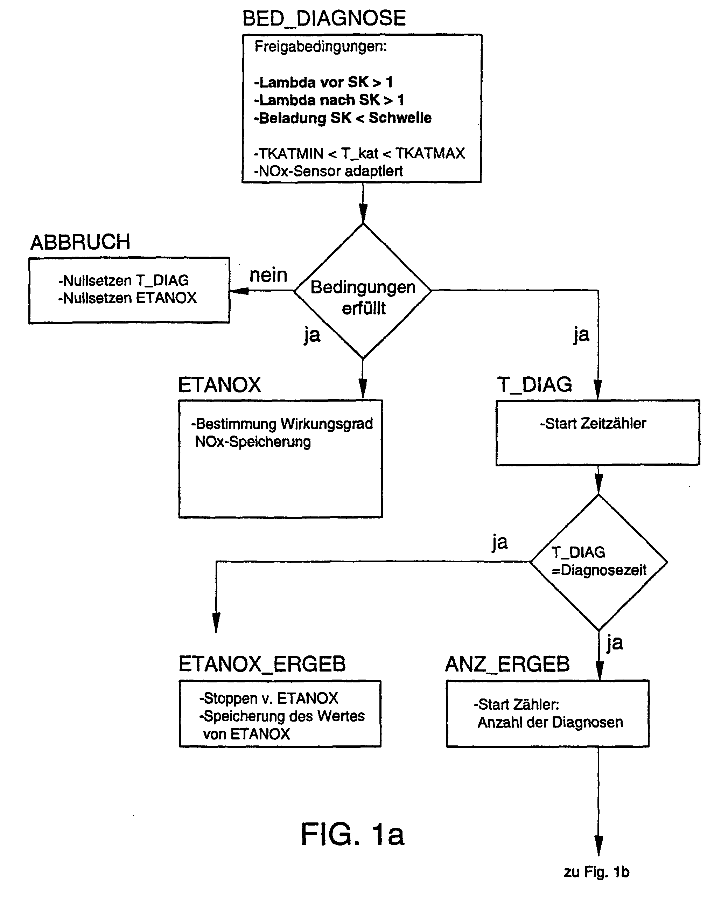

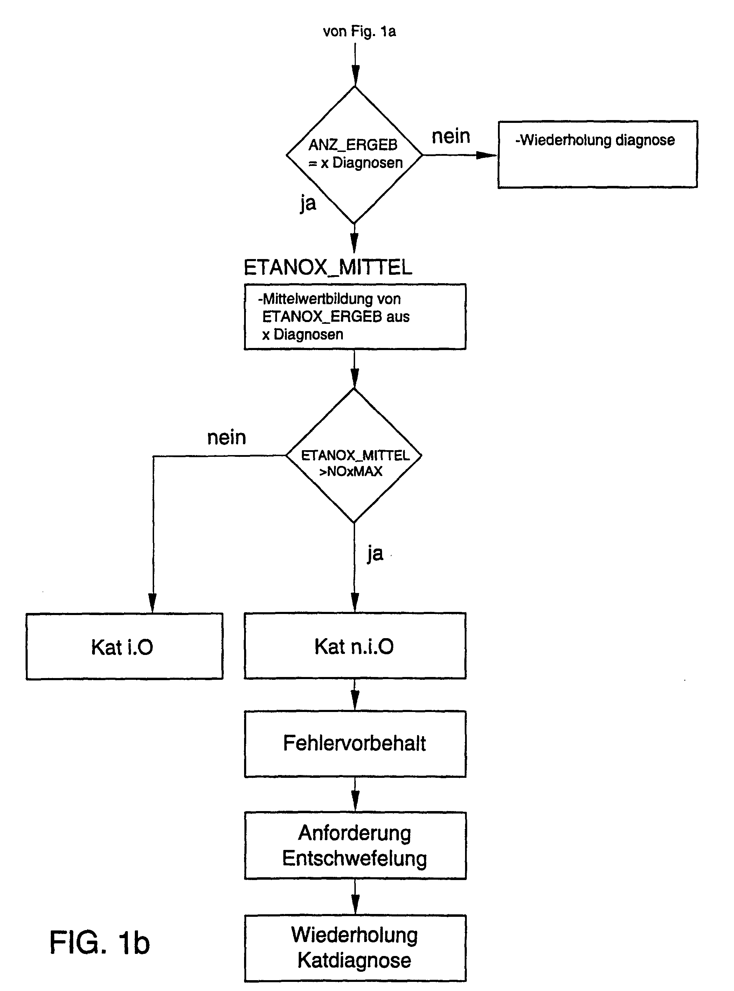

Bei dem in den Fig. 1a und 1b dargestellten erfindungsgemäßen Verfahren zur Überwachung eines einer mager betriebenen Brennkraftmaschine nachgeschalteten NOₓ-Speicherkatalysators (SK) wird in dem Block BED_DIAGNOSE zunächst die Einhaltung vorbestimmter Betriebsbedingungen überprüft, die u.a. gewährleisten, daß die nachfolgende Katalysatorüberprüfung unter mageren Abgasbedingungen abläuft. Insbesondere wird hierbei überprüft, ob der Lambda-Wert vor dem NOₓ-Speicherkatalysator und nach dem NOₓ-Speicherkatalysator größer 1 ist und ob der Magerbetrieb durch ein Statusbit der Motorsteuerung angezeigt wird. Eventuell reicht jedoch auch bereits einer der angegebenen Lambda-Werte zur Steuerung des Verfahrens aus.

Zudem muß die Katalysatortemperatur T_kat innerhalb eines vorbestimmten Temperaturbereiches TKATMIN < T_kat < TKATMAX liegen, in dem der Katalysator für eine NOₓ-Speicherung aktiv ist. Dieser Temperaturbereich ist von dem jeweils verwendeten Katalysatorsystem, insbesondere von der Katalysatorbeschichtung abhängig. Er liegt jedoch typischerweise zwischen 200 und 600 °C.

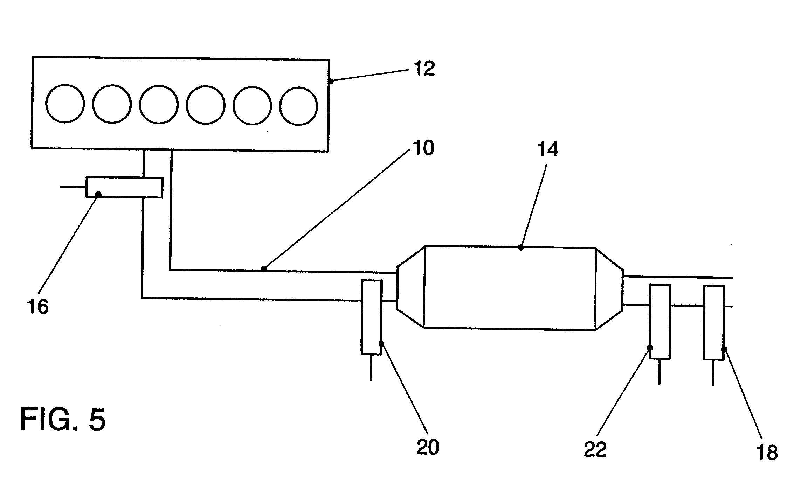

Die zur Durchführung dieser Überprüfung erforderlichen Temperatur- und Lambda-Werte werden auf die nachstehend anhand von Fig. 5 ausführlich beschriebene Art und Weise durch entsprechende Sensoren bestimmt.

Außerdem muß die NOₓ-Beladung des Speicherkatalysator unter einem vorbestimmten Beladungsschwellenwert liegen, der idealerweise einem vollständig regenerierten Katalysator entspricht.

Ferner wird überprüft, ob der oder die zur Bestimmung des Speicherwirkungsgrades eingesetzten NOₓ-Sensoren, die nachstehend anhand von Fig. 5 ebenfalls noch ausführlich beschrieben werden, bezüglich einer Nullpunktsdrift und eines Kennlinien-Offsets adaptiert sind.

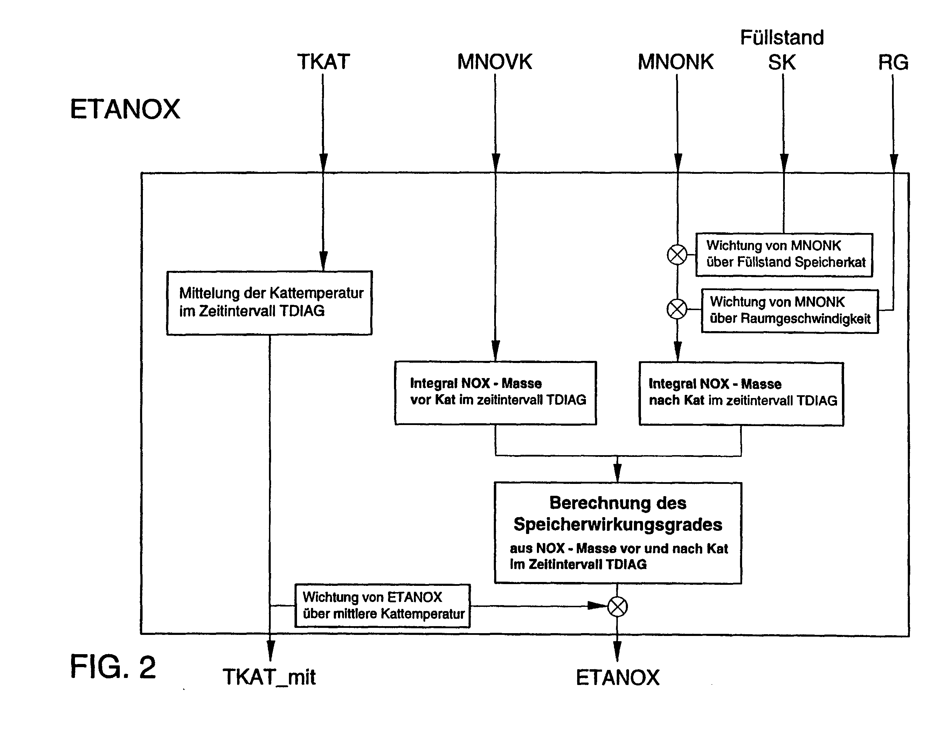

Bei Erfüllung dieser Bedingungen wird in dem Block ETANOX der NOx-Speicherwirkungsgrad ETANOX auf die nachstehend anhand von Fig. 2 noch ausführlicher beschriebenen Art und Weise aus den in NOₓ-Massenströme umgerechneten NOₓ-Abgaskonzentrationen vor und nach dem NOₓ-Speicherkatalysator bestimmt. Gleichzeitig wird eine Zeitfunktion oder ein Zeitzähler T_DIAG gestartet, der die Überwachungs- oder Diagnosezeit mitzählt. Haben die Freigabebedingungen für die Diagnose über einen applizierbaren geeigneten Zeitraum vorgelegen, wird die Berechnung des Speicherwirkungsgrades im Block ETANOX gestoppt und das Diagnoseergebnis im Block ETANOX_ERGEB gespeichert.

Bei Nichteinhaltung der Bedingungen wird das Verfahren gar nicht erst gestartet, wobei T_DIAG und ETANOX gleich Null gesetzt werden.

Um eine ordnungsgemäße Katalysatordiagnose zu gewährleisten, wird die Einhaltung der in dem Block BED_DIAGNOSE angegebenen Bedingungen auch während der Durchführung des Verfahrens kontinuierlich überprüft. Bei Nichteinhaltung der Bedingungen wird das Überwachungs- oder Diagnoseverfahren vorzeitig abgebrochen oder zumindest unterbrochen.

Die Anzahl der so ermittelten Diagnoseergebnisse wird im Block ANZ_ERGEB gezählt und mit einer vorbestimmten Anzahl verglichen. Bei Unterschreitung dieser vorbestimmten Anzahl wird eine erneute Diagnose durchgeführt, während ansonsten die gespeicherten Diagnoseergebnisse ETANOX_ERGEB gemittelt werden. Der so bestimmte mittlere Katalysatorwirkungsgrad ETANOX_MITTEL wird mit einem vorbestimmten Schwellenwert NOₓMAX verglichen, der dem Übergang von einem defekten Katalysator zu einem ausreichend funktionsfähigen Katalysator entspricht. Liegt der ermittelte mittlere Katalysatorwirkungsgrad ETANOX_MITTEL über dem vorbestimmten Schwellenwert NOₓMAX, ist der Katalysator in Ordnung, während ansonsten der Verdacht eines Katalysatordefektes besteht.

Da die Aktivität des Katalysators jedoch auch lediglich durch eine zu hohe Stickoxidbeladung und/oder eine reversible Vergiftung, wie z.B. durch Schwefel, beeinträchtigt sein könnte, wird zunächst ein Fehlervorbehalt gesetzt und es wird zunächst zumindest eine De-Sulfatierung und/oder NOₓ-Regeneration eingeleitet. Anschließend wird der oben beschriebene Diagnosealgorithmus wiederholt und erneut der Katalysatorwirkungsgrad bestimmt. Bei einem erneuten Unterschreiten des vorbestimmten Schwellenwertes NOₓMAX ist von einem defekten Katalysator auszugehen, so daß ein Katalysatordefekt angezeigt wird.

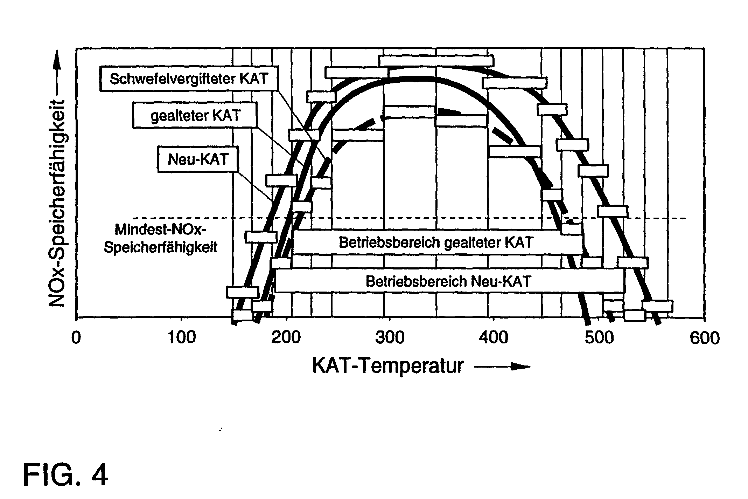

Die eigentliche Berechnung des Speicherwirkungsgrades ETANOX erfolgt in dem bereits erwähnten Block ETANOX in Fig. 1a, der in Fig. 2 noch einmal ausführlicher dargestellt ist. Wenn die oben angegebenen Zulässigkeitsvoraussetzungen oder Freigabebedingungen zur Durchführung einer Katalysatorüberwachung oder Erstellung einer Katalysatordiagnose erfüllt sind, werden dort die aus den NOₓ-Abgaskonzentrationen bestimmten NOₓ-Massenströme vor und nach dem NOₓ-Speicherkatalysator MNOVK bzw. MNONK im Überwachungs- oder Diagnoseintervall T_DIAG jeweils aufintegriert. Der NOₓ-Massenstrom MNONK hinter dem NOₓ-Speicherkatalysator wird hierbei in Abhängigkeit von der Speicherbeladung oder dem Speicherfüllstand und der Raumgeschwindigkeit RG bewertet und vor der Durchführung der Integration entsprechend gewichtet, da diese Parameter einen starken Einfluß auf die Einspeicherrate haben und somit die NOₓ-Emission hinter dem NOₓ-Speicherkatalysator entsprechend stark beeinflussen. Aus den so erhaltenen NOₓ-Massenströmen, NOₓ-Masse vor und nach dem NOₓ-Speicherkatalysator, wird dann nach dem Ablauf des Zeitintervalls T_DIAG der NOₓ-Speicherwirkungsgrad in dem betreffenden Zeitintervall berechnet. Da, wie in Fig. 4 zu erkennen ist, die Unterscheidbarkeit der NOₓ-Speicheraktivität für verschiedene Verschlechterungszustände, wie z.B. eine Aktivitätsverschlechterung aufgrund einer Temperaturalterung oder einer Schwefelvergiftung des Katalysators, sehr stark temperaturabhängig ist, wird der so ermittelte Speicherwirkungsgrad zur Ermittlung des auf die oben im Zusammenhang mit den Figuren 1a und 1b beschriebene Art und Weise letztendlich zur Katalysatordiagnose verwendeten eigentlichen Speicherwirkungsgrades ETANOX anschließend noch mit der im Überwachungs- oder Diagnosezeitraum T_DIAG gemittelten Katalysatortemperatur TKAT_mit gewichtet, so daß die mittlere Katalysatortemperatur TKAT_mit erfindungsgemäß in die Bewertung des Speicherwirkungsgrades ETANOX mit einbezogen wird.

Eine andere Möglichkeit zur Berücksichtigung des Einflusses der mittelbaren Katalysatortemperatur TKAT_mit auf den NOₓ-Speicherwirkungsgrad ETANOX besteht darin, eine Kennlinie oder ein Kennfeld des NOₓ-Speicherwirkungsgrades als Funktion der mittleren Katalysatortemperatur TKAT_mit zu erstellen, aus dessen charakteristischen Veränderungen gealterte, defekte oder vergiftete Katalysatoren erkannt und sicher diagnostiziert werden.

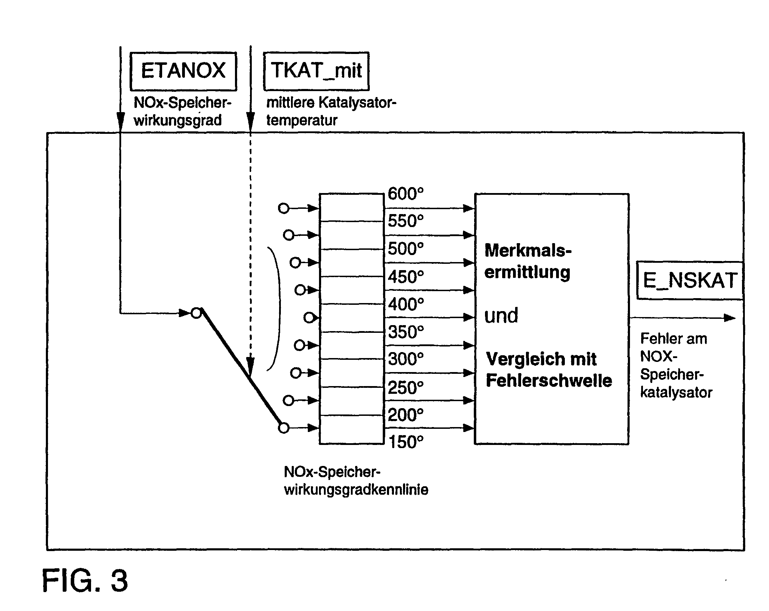

Wie in Fig. 3 schematisch dargestellt ist, erfolgt die Erstellung des Kennfeldes hierbei beispielsweise durch "Ablegen" der für unterschiedliche Katalysatortemperaturen ermittelten NOₓ-Speicherwirkungsgrade in unterschiedlichen Speicherzellen, die jeweils einer bestimmten mittleren Katalysatortemperatur zugeordnet sind. Das "Ablegen" kann hierbei ein einfaches Übertragen, ein Mitteln oder aber auch ein Adaptieren sein (wie z.B. ein Inkrementieren der Speicherzelle, wenn der Wert in der Speicherzelle größer ist als der aktuelle Wert oder ein Dekrementieren, wenn der Wert in der Speicherzelle kleiner ist als der aktuelle Wert).

Nach einer gewissen Motorbetriebszeit mit unterschiedlichen Betriebszuständen, die unterschiedlich hohe Katalysatortemperaturen zur Folge haben, liegt daher im Speicher einer zugeordneten Auswerteeinrichtung oder Motorsteuerungseinrichtung eine Kennlinie oder ein Kennfeld vor, das die Abhängigkeit des Speicherwirkungsgrades von der Katalysatortemperatur beinhaltet. Wie in Fig. 4 zu erkennen ist, nimmt die NOₓ-Speicherfähigkeit eines NOₓ-Speicherkatalysators mit zunehmender Katalysatortemperatur üblicherweise zunächst stark zu, durchläuft dann ein breit ausgebildetes Maximum und nimmt anschließend wieder rasch ab, wobei der Kurvenlauf durch den aktuellen Betriebszustand des Speicherkatalysators stark beeinflußt wird. So ist der Kurvenverlauf bei einem gealterten oder vergifteten NOₓ-Speicherkatalysators in charakteristischer Weise gegenüber dem Neuzustand verändert, was sich beispielsweise in einem späteren Kurvenbeginn, einem niedrigeren Kurvenmaximum und einem frühzeitigeren Verlust der NOₓ-Speicherfähigkeit bei höherer Katalysatortemperatur bemerkbar macht, so daß der durch die minimal zulässige NOₓ-Speicherfähigkeit des Katalysators bestimmte Betriebsbereich entsprechend kleiner wird. Weitere charakteristische Veränderungen können beispielsweise auch die Verringerung des Speicherwirkungsgrades bei bestimmten Temperaturen, eine entsprechende Veränderung des Mittelwertes der Verringerungen des Speicherwirkungsgrades über einen bestimmten Temperaturbereich oder eine Veränderung der Katalysatortemperatur sein, bei der ein bestimmter Wirkungsgrad erreicht ist. Diese charakteristischen Merkmale werden durch die Auswerte- oder Motorsteuerungseinrichtung bestimmt und mit vorbestimmten Fehlerschwellen verglichen, bei deren Überschreitung ein Defekt des Katalysators signalisiert oder eine übermäßig hohe Schwefel- und/oder NOₓ-Beladung oder eine Alterung des Katalysators festgestellt wird.

Fig. 5 zeigt in schematischer Darstellung eine zur Durchführung des beschriebenen Verfahrens geeignete erfindungsgemäße Abgasreinigungsvorrichtung, die im Abgasstrang 10 einer mager betriebenen Brennkraftmaschine 12 angeordnet ist. Die Abgasreinigungsvorrichtung umfaßt einen NOₓ-Speicherkatalysator 14, der die von der Brennkraftmaschine 12 emittierten Stickoxide im Magerbetrieb einspeichert und bei intermittierend durchgeführten Katalysatorregenerationen durch kurzzeitige Einstellung fetter Betriebsbedingungen als unschädlichen Stickstoff freisetzt.

Dem NOₓ-Speicherkatalysator 14 ist jeweils ein Lambda-Sensor 16 bzw. 18 vorgeschaltet bzw. nachgeschaltet, die im gesamten Betriebsbereich kontinuierlich das Luftverhältnis in dem in den Katalysator 14 einströmenden bzw. aus ihm ausströmenden Abgas und damit den entsprechenden Lambda-Wert messen.

Zusätzlich hierzu ist dem NOₓ-Speicherkatalysator 14 auch noch jeweils ein NOₓ-Sensor 20 bzw. 22 vorgeschaltet bzw. nachgeschaltet, die die Abgaskonzentration der Stickoxide vor dem NOₓ-Speicherkatalysator 14 bzw. nach dem NOₓ-Speicherkatalysator 14 messen. Die NOₓ-Sensoren 20 und 22 sind bezüglich einer Nullpunktsdrift und eines Kennlinien-Offsets adaptiert.

Die benötigten Informationen über die Stickoxidkonzentration bzw. den NOₓ-Massenstrom in dem in den Katalysator 14 einströmenden Abgas können jedoch auch durch Modellierungen unter Verwendung eines Kennfeldes (Drehzahl, Einspritzmenge) berechnet werden, so daß der vorgeschaltete NOₓ-Sensor 20 zur Durchführung des erfindungsgemäßen Verfahrens nicht unbedingt erforderlich ist und bei anderen erfindungsgemäßen Ausführungsformen, die statt dessen eine entsprechende Modellierungseinrichtung umfassen, auch weggelassen werden kann.

Zudem können der nachgeschaltete NOₓ-Sensor 22 und der nachgeschaltete Lambda-Sensor 18 auch in einem Multifunktionssensor integriert sein, der sowohl in der Lage ist, die NOₓ-Konzentration als auch die Sauerstoffkonzentration bzw. das Luftverhältnis nach dem NOₓ-Speicherkatalysator 14 zu messen. Entsprechendes gilt auch für die dem NOₓ-Speicherkatalysator 14 vorgeschalteten Sensoren 16 und 20.

Dem NOₓ-Speicherkatalysator 14 ist auch jeweils ein (nicht dargestellter) Temperatursensor vorgeschaltet bzw. nachgeschaltet, aus deren gemittelten Meßwerten die erforderliche Katalysatortemperatur T_kat bestimmt wird.

Die Sensorsignale werden über (nicht dargestellte) Leitungen einer (ebenfalls nicht dargestellten) Auswerteeinrichtung zugeleitet, in der die zur Durchführung des Verfahrens erforderlichen Informationen, wie z.B. die Katalysatortemperatur T_kat und die NOₓ-Massenströme vor und nach dem Katalysator MNOVK bzw. MNONK, aus den Meßergebnissen ermittelt und einer (ebenfalls nicht dargestellten) Steuerungseinrichtung zur Steuerung des oben beschriebenen erfindungsgemäßen Verfahrens zugeleitet werden. Die Auswerteeinrichtung und die Steuerungseinrichtung können in einer der Brennkraftmaschine (12) zugeordneten (nicht dargestellten) Motorsteuerungseinrichtung integriert sein.

## Patentansprüche

1. Verfahren zur Überwachung eines einer mager betriebenen Brennkraftmaschine (12) nachgeschalteten NOₓ-Speicherkatalysators (14) mit folgenden Verfahrensschritten:
a.) Bestimmung der NOₓ-Abgaskonzentrationen vor und hinter dem Noₓ-Speicherkatalysator (14):
b.) Bestimmung des NOₓ-Speicherwirkungsgrades aus den ermittelten NOₓ-Abgaskonzentrationen;
c.) Vergleich des ermittelten NOₓ-Speicherwirkungsgrades mit einem vorbestimmten ersten Schwellenwert NOₓMAX; und bei einer Überschreitung dieses Schwellenwertes:
d.) Durchführung zumindest einer NOₓ-Regeneration und/oder De-Sulfatierung; erneute Bestimmung des NOₓ-Speicherwirkungsgrades gemaß den Verfahrensschritten a.) und b.);
Vergleich dieses erneut ermittelten NOₓ-Speicherwirkungsgrades mit dem ersten Schwellenwert NOₓMAX; und
bei einer erneuten Überschreitung dieses Schwellenwertes: Anzeige eines Katalysatordefektes.

2. Verfahren nach Anspruch 1, **dadurch gekennzeichnet, daß** zur Einleitung des Überwachungsverfahrens und bei dessen Durchführung vorbestimmte Betriebsbedingungen erfüllt sein müssen, denen die Katalysatorbeladung, die Katalysatortemperatur T_kat und der Sauerstoffgehalt des Abgases, d. h. der Lambda-Wert, genügen müssen.

3. Verfahren nach Anspruch 2, **dadurch gekennzeichnet, daß** die NOₓ-Beladung des NOₓ-Speicherkatalysators (14) unter einem vorbestimmten zweiten Schwellenwert liegt.

4. Verfahren nach Anspruch 3, **dadurch gekennzeichnet, daß** der NOₓ-Speicherkatalysator (14) vollständig regeneriert ist.

5. Verfahren nach einem der Ansprüche 2 bis 4, **dadurch gekennzeichnet, daß** die Katalysatortemperatur T_kat innerhalb eines vorbestimmten Temperaturbereiches TKATMIN < T_kat < TKATMAX liegt.

6. Verfahren nach Anspruch 5, **dadurch gekennzeichnet, daß** der Temperaturbereich 200 - 600 °C beträgt.

7. Verfahren nach einem der Ansprüche 2 bis 6, **dadurch gekennzeichnet, daß** der Lambda-Wert vor und/oder nach dem NOₓ-Speicherkatalysator (14) > 1 ist.

8. Verfahren nach Anspruch 7, **dadurch gekennzeichnet, daß** der Magerbetrieb durch eine zugeordnete Motorsteuerungseinrichtung angezeigt wird.

9. Verfahren nach einem der vorhergehenden Ansprüche, **dadurch gekennzeichnet, daß** mit Beginn des Verfahrens eine Zeitfunktion T_DIAG gestartet wird und daß der ermittelte NOₓ-Speicherwirkungsgrad ETANOX_ERGEB beim Erreichen einer vorbestimmten Diagnosezeit gespeichert wird.

10. Verfahren nach Anspruch 9, **dadurch gekennzeichnet, daß** die gespeicherten Speicherwirkungsgrade ETANOX_ERGEB gezählt und nach Erreichen einer vorbestimmten Anzahl an gespeicherten Werten gemittelt werden und daß der so bestimmte Mittelwert ETANOX_MITTEL mit dem ersten Schwellenwert NOₓMAX verglichen wird.

11. Verfahren nach Anspruch 9 oder 10, **dadurch gekennzeichnet, daß** der ermittelte Speicherwirkungsgrad mit der in der Diagnosezeit T_DIAG bestimmten mittleren Katalysatortemperatur TKAT_mit gewichtet wird.

12. Verfahren nach einem der vorhergehenden Ansprüche, **dadurch gekennzeichnet, daß** der NOₓ-Speicherwirkungsgrad als Funktion der mittleren Katalysatortemperatur T_KAT_mit bestimmt und in einem Kennfeld gespeichert wird, aus dessen charakteristischen Veränderungen Alterungsvorgänge oder Vergiftungserscheinungen des NOₓ-Speicherkatalysators (14) oder ein Katalysatordefekt diagnostiziert werden.

13. Verfahren nach Anspruch 12, **dadurch gekennzeichnet, daß** die charakteristischen Veränderungen aus einer Verringerung des Speicherwirkungsgrades bei bestimmten Temperaturen, eine entsprechende Veränderung des Mittelwertes der Verringerung des Speicherwirkungsgrades über einem bestimmten Temperaturbereich oder aus einer Veränderung der Katalysatortemperatur, bei der ein bestimmter Wirkungsgrad erreicht ist, bestimmt werden.

14. Verfahren nach einem der vorhergehenden Ansprüchen, **dadurch gekennzeichnet, daß** die NOₓ-Abgaskonzentration oder der NOₓ-Massenstrom MNONK nach dem NOₓ-Speicherkatalysator (14) in Abhängigkeit von dem Füllstand des Speicherkatalysators (14) und der Raumgeschwindigkeit RG gewichtet wird.

15. Verfahren nach einem der vorhergehenden Ansprüche, **dadurch gekennzeichnet, daß** die mittlere Katalysatortemperatur TKAT_mit durch vor und nach dem NOₓ-Speicherkatalysator (14) angeordnete Temperatursensoren bestimmt oder aber aus den einer zugeordneten Motorsteuerungseinrichtung vorliegenden Informationen berechnet wird

16. Verfahren nach einem der vorhergehenden Ansprüche, **dadurch gekennzeichnet, daß** der Lambda-Wert und die NOₓ-Abgaskonzentration des in den NOₓ-Speicherkatalysator (14) einströmenden und/oder aus ihm ausströmenden Abgases durch einen vorgeschalteten bzw. nachgeschalteten Multifunktionssensor bestimmt werden, der eine NOₓ-empfindliche und eine sauerstoffempfindliche Meßeinrichtung umfaßt.

17. Abgasreinigungsvorrichtung für eine mager betriebene Brennkraftmaschine (12) mit:
• einem NOₓ-Speicherkatalysator (14);
• einem dem NOₓ-Speicherkatalysator (14) vorgeschalteten Lambda-Sensor (16);
• einem dem NOₓ-Speicherkatalysator (14) vorgeschalteten NOₓ-Sensor (20) und/oder einer Modellierungseinrichtung zur Bestimmung der NOₓ-Konzentration des in den NOₓ-Speicherkatalysator (11) einströmenden Abgases;
• einem dem NOₓ-Speicherkatalysator (14) nachgeschalteten NOₓ-Sensor (22); und mit
• einer Auswerteeinrichtung für die Sensorsignale;
**gekennzeichnet durch**
• einen dem NOₓ-Speicherkatalysator (14) nachgeschalteten Lambda-Sensor (16); und
• eine Steuerungseinrichtung, die das Verfahren nach einem der vorhergehenden Ansprüche steuert.

18. Abgasreinigungsvorrichtung nach Anspruch 17, **dadurch gekennzeichnet, daß** dem NOₓ-Speicherkataiysator (14) auch ein Temperatursensor vor- und/oder nachgeschaltet ist.

19. Abgasreinigungsvorrichtung nach Anspruch 17 oder 18, **dadurch gekennzeichnet, daß** die vor und/oder nachgeschalteten Sensoren (16, 20 bzw. 18, 22) jeweils in einem Multifunktionssensor integriert sind, der zumindest eine NOx-empfindliche und eine sauerstoffempfindliche Meßeinrichtung umfaßt.

20. Abgasreinigungsvorrichtung nach einem der Ansprüche 17 bis 19, **dadurch gekennzeichnet, daß** die Sensoren (16 - 22) hinsichtlich einer Nullpunktdrift und eines Kennlinien-Offsets adaptiert sind.

## Claims

1. Method for monitoring an NOₓ storage catalytic converter (14) which is connected downstream of a lean-burn internal-combustion engine (12), comprising the following method steps:
a) determining the NOₓ exhaust-gas concentrations upstream and downstream of the NOₓ storage catalytic converter (14);
b) determining the NOₓ storage efficiency from the determined NOₓ exhaust-gas concentrations;
c) comparing the determined NOₓ storage efficiency with a predetermined first threshold NOₓMAX; and in the event of this threshold being exceeded:
d) carrying out at least one NOₓ regeneration and/or desulphating;
determining again the NOₓ storage efficiency in accordance with method steps a) and b);
comparing this newly determined NOₓ storage efficiency with the first threshold NOₓMAX; and
in the event of this threshold being exceeded again: indicating a catalytic converter defect.

2. Method according to Claim 1, **characterized in that** predetermined operating conditions, which have to be satisfied by the catalytic converter loading, the catalytic converter temperature T_kat and the oxygen content of the exhaust gas, i.e. the lambda value, have to be fulfilled in order for the monitoring method to be initiated and while the method is being carried out.

3. Method according to Claim 2, **characterized in that** the NOₓ loading of the NOₓ storage catalytic converter (14) is below a predetermined second threshold.

4. Method according to Claim 3, **characterized in that** the NOₓ storage catalytic converter (14) is completely regenerated.

5. Method according to one of Claims 2 to 4, **characterized in that** the catalytic converter temperature T_kat is within a predetermined temperature range TKATMIN<T_kat<TKATMAX.

6. Method according to Claim 5, **characterized in that** the temperature range is 200-600°C.

7. Method according to one of Claims 2 to 6, **characterized in that** the lambda value upstream and/or downstream of the NOₓ storage catalytic converter (14) is >1.

8. Method according to Claim 7, **characterized in that** the lean-burn operation is indicated by an associated engine management system.

9. Method according to one of the preceding claims, **characterized in that**, when the method commences, a time function T_DIAG is started, and **in that** the determined NOₓ storage efficiency ETANOX_ERGEB is stored when a predetermined diagnosis time is reached.

10. Method according to Claim 9, **characterized in that** the stored storage efficiencies ETANOX_ERGEB are counted and, after a predetermined number of stored values have been reached, a mean is formed, and **in that** the mean value ETANOX_MITTEL which has been determined in this way is compared with the first threshold value NOₓMAX.

11. Method according to Claim 9 or 10, **characterized in that** the determined storage efficiency is weighted with the mean catalytic converter temperature TKAT_mit determined in the diagnosis time T_DIAG.

12. Method according to one of the preceding claims, **characterized in that** the NOₓ storage efficiency is determined as a function of the mean catalytic converter temperature T_KAT_mit and is stored in a characteristic diagram, from the characteristic changes in which ageing phenomena or poisoning phenomena of the NOₓ storage catalytic converter (14) or a catalytic converter defect are diagnosed.

13. Method according to Claim 12, **characterized in that** the characteristic changes are determined from a reduction in the storage efficiency at defined temperatures, a corresponding change in the mean value for the reduction in the storage efficiency over a defined temperature range or from a change in the catalytic converter temperature at which a defined efficiency is reached.

14. Method according to one of the preceding claims, **characterized in that** the NOₓ exhaust-gas concentration or the NOₓ mass flow rate MNONK downstream of the NOₓ storage catalytic converter (14) is weighted as a function of the filling level of the storage catalytic converter (14) and the space velocity RG.

15. Method according to one of the preceding claims, **characterized in that** the mean catalytic converter temperature TKAT_mit is determined by temperature sensors arranged upstream and downstream of the NOₓ storage catalytic converter (14) or is calculated from the information available to an associated engine management system.

16. Method according to one of the preceding claims, **characterized in that** the lambda value and the NOₓ exhaust-gas concentration of the exhaust gas flowing into the NOₓ storage catalytic converter (14) and/or flowing out of it are determined by an upstream or downstream multifunctional sensor, which comprises an NOₓ-sensitive measurement device and an oxygen-sensitive measurement device.

17. Exhaust-gas cleaning device for a lean-burn internal-combustion engine (12), having:
• an NOₓ storage catalytic converter (14);
• a lambda sensor (16) connected upstream of the NOₓ storage catalytic converter (14);
• an NOₓ sensor (20) connected upstream of the NOₓ storage catalytic converter (14) and/or a modelling device for determining the NOₓ concentration of the exhaust gas flowing into the NOₓ storage catalytic converter (14);
• an NOₓ sensor (22) connected downstream of the NOₓ storage catalytic converter (14); and having
• an evaluation device for the sensor signals;
**characterized by**
• a lambda sensor (16) connected downstream of the NOₓ storage catalytic converter (14); and
• a control device which controls the method according to one of the preceding claims.

18. Exhaust-gas cleaning device according to Claim 17, **characterized in that** a temperature sensor is also connected upstream and/or downstream of the NOₓ storage catalytic converter (14).

19. Exhaust-gas cleaning device according to Claim 17 or 18, **characterized in that** the upstream and/or downstream sensors (16, 20 and 18, 22) are in each case integrated in a multifunctional sensor which comprises at least one NOₓ-sensitive measurement device and an oxygen-sensitive measurement device.

20. Exhaust-gas cleaning device according to one of Claims 17 to 19, **characterized in that** the sensors (16-22) are adapted with regard to a zero drift and a characteristic-curve offset.

## Revendications

1. Procédé de surveillance d'un catalyseur à accumulation de NOₓ (14), placé à la suite d'une machine à combustion interne fonctionnant en régime maigre (12), ayant les étapes de procédé suivantes :
a.) détermination des concentrations des gaz d'échappement en NOₓ, avant et après le catalyseur à accumulation de NOₓ (14) :
b.) détermination du rendement d'accumulation de NOₓ à partir des concentrations des gaz d'échappement en NOₓ déterminées ;
c.) comparaison du rendement d'accumulation de NOₓ déterminé à une première valeur seuil prédéterminée NOₓMAX ; et en cas de dépassement de cette valeur seuil :
d.) exécution d'au moins une régénération des NOₓ et/ou d'une désulfuration ; détermination renouvelée du rendement d'accumulation de NOₓ conformément aux étapes de procédé a.) et b.) ;
comparaison du rendement d'accumulation de NOₓ nouvellement déterminé à la première valeur seuil NOₓMAX ; et
en cas de nouveau dépassement de cette valeur seuil : indication d'un défaut du catalyseur.

2. Procédé selon la revendication 1, **caractérisé en ce qu'**en vue de l'initiation du procédé de surveillance et au cours de son exécution, il faut remplir des conditions de fonctionnement prédéterminées, auxquelles la charge du catalyseur, la température du catalyseur T_kat et la teneur en oxygène du gaz d'échappement, c'est-à-dire la valeur lambda, doivent satisfaire.

3. Procédé selon la revendication 2, **caractérisé en ce que** la charge en NOₓ du catalyseur à accumulation de NOₓ (14) se situe en dessous d'une deuxième valeur seuil prédéterminée.

4. Procédé selon la revendication 3, **caractérisé en ce que** le catalyseur à accumulation de NOₓ (14) est complètement régénéré.

5. Procédé selon l'une quelconque des revendications 2 à 4, **caractérisé en ce que** la température du catalyseur T_kat se situe au sein d'un domaine de température prédéterminé TKATMIN < T_kat < TKATMAX.

6. Procédé selon la revendication 5, **caractérisé en ce que** le domaine de température est de 200 - 600EC.

7. Procédé selon l'une quelconque des revendications 2 à 6, **caractérisé en ce que** la valeur lambda avant et/ou après le catalyseur à accumulation de NOₓ (14) est > 1.

8. Procédé selon la revendication 7, **caractérisé en ce que** le régime maigre est indiqué par un équipement de commande du moteur correspondant.

9. Procédé selon l'une quelconque des revendications précédentes, **caractérisé en ce qu'**avec le début du procédé on démarre une fonction temporelle T_DIAG et **en ce que** l'on sauvegarde le rendement d'accumulation de NOₓ déterminé ETANOX_ERGEB, une fois parvenu à un temps de diagnostic prédéterminé.

10. Procédé selon la revendication 9, **caractérisé en ce que** l'on compte les rendements d'accumulation sauvegardés ETANOX_ERGEB et **en ce que**, une fois atteint un nombre prédéterminé de valeurs sauvegardées, e'ou determine leur valeur moyenne et **en ce que** l'on compare la valeur moyenne ETANOX_MITTEL ainsi déterminée à la première valeur seuil NOₓMAX.

11. Procédé selon la revendication 9 ou 10, **caractérisé en ce que** l'on pondère le rendement d'accumulation déterminé à l'aide de la température de catalyseur moyenne TKAT_mit, déterminée pendant le temps de diagnostic T_DIAG.

12. Procédé selon l'une quelconque des revendications précédentes, **caractérisé en ce que** le rendement d'accumulation de NOₓ est déterminé en fonction de la température de catalyseur moyenne T_KAT_mit et est sauvegardé dans un champ caractéristique, à partir des modifications caractéristiques duquel les phénomènes de vieillissement ou les symptômes d'empoisonnement du catalyseur à accumulation de NOₓ (14) ou un défaut du catalyseur sont diagnostiqués.

13. Procédé selon la revendication 12, **caractérisé en ce que** les modifications caractéristiques sont déterminées à partir d'une diminution du rendement d'accumulation à des températures déterminées, d'une modification correspondante de la valeur moyenne de la diminution du rendement d'accumulation sur un domaine de température déterminé ou d'une modification de la température du catalyseur, à laquelle il atteint un rendement déterminé.

14. Procédé selon l'une quelconque des revendications précédentes, **caractérisé en ce que** la concentration des gaz d'échappement en NOₓ ou le courant massique de NOₓ MNONK est pondéré, après le catalyseur à accumulation de NOₓ (14), en fonction de l'état de remplissage du catalyseur à accumulation (14), et de la vitesse spatiale RG.

15. Procédé selon l'une quelconque des revendications précédentes, **caractérisé en ce que** la température de catalyseur moyenne TKAT_mit est déterminée par des détecteurs de température disposés avant et après le catalyseur à accumulation de NOₓ (14) ou est calculée à partir des informations disponibles en provenance d'un équipement de commande du moteur correspondant.

16. Procédé selon l'une quelconque des revendications précédentes, **caractérisé en ce que** la valeur lambda et la concentration des gaz d'échappement en NOₓ du gaz d'échappement, affluant dans le catalyseur à accumulation de NOₓ (19) et/ou s'échappant de ce dernier, sont déterminées par un détecteur à fonctions multiples, placé avant ou à la suite, qui comprend un équipement de mesure sensible aux NOₓ et sensible à l'oxygène.

17. Equipement de purification des gaz d'échappement pour une machine à combustion interne fonctionnant en régime maigre (12), ayant :
• un catalyseur à accumulation de NOₓ (14) ;
• un détecteur lambda placé avant le catalyseur à accumulation de NOₓ (14) ;
• un détecteur de NOₓ (20), placé avant le catalyseur à accumulation de NOₓ (14) et/ou un équipement de modélisation en vue de la détermination de la concentration en NOₓ du gaz d'échappement affluant dans le catalyseur à accumulation de NOₓ (14) ;
• un détecteur des NOₓ (22), placé à la suite du catalyseur à accumulation de NOₓ (14) et
• un équipement d'évaluation des signaux de détecteurs ;
**caractérisé par**
• un détecteur lambda (16), placé à la suite du catalyseur à accumulation de NOₓ (14) ; et
• un équipement de commande, qui commande le procédé selon l'une quelconque des revendications précédentes.

18. Equipement de purification des gaz d'échappement selon la revendication 17, **caractérisé en ce que** l'on place également un détecteur de température avant, et/ou à la suite, du catalyseur à accumulation de NOₓ (14).

19. Equipement de purification des gaz d'échappement selon la revendication 17 ou 18, **caractérisé en ce que** les détecteurs (16, 20 ou 18, 22), placés avant, et/ou à la suite, sont intégrés à chaque fois dans un détecteur à fonctions multiples, qui comprend au moins un équipement de mesure sensible aux NOₓ et sensible à l'oxygène.

20. Equipement de purification des gaz d'échappement selon l'une quelconque des revendications 17 à 19, **caractérisé en ce que** les détecteurs (16 - 22) sont adaptés en ce qui concerne une dérive du point zéro et un décalage d'une ligne caractéristique.
